# EUROPÄISCHE PATENTANMELDUNG

(11) **EP 4 109 732 A1**
(43) Veröffentlichungstag der Anmeldung: **28.12.2022**
(21) Anmeldenummer: 22177726.1
(22) Anmeldetag: 08.06.2022
(51) Int. Cl.: H02M 3/335, H02M 1/00, H02M 3/00

(54) **BETRIEBSVERFAHREN FÜR EINE VERSORGUNGSSTATION**

(30) Priorität: 23.06.2021 DE 102021116288
(71) Anmelder: Compleo Charging Solutions AG, 44309 Dortmund (DE)
(72) Erfinder: Turki, Faical, 59174 Kamen (DE); Paloja, Imer, 42283 Wuppertal (DE)
(74) Vertreter: Wickord, Wiro

(57) **Zusammenfassung**

Die Erfindung betrifft ein Verfahren zum Betreiben einer elektrischen Versorgungsstation mit einem Gleichspannungswandler umfassend einen Transformator (2) zur galvanischen Trennung einer Primärseite (1) des Transformators (2) von einer Sekundärseite (3), wobei die Primärseite (1) an einen Wechselrichter angeschlossen wird, wobei an dem Transformator (2) sekundärseitig wenigstens zwei zueinander parallele Sekundärbrückenzweige (3.1, 3.2, 3.3) vorgesehen sind, wobei ein erster Sekundärbrückenzweig (3.1) zwei in Reihe verschaltete Halbleiterschaltelemente (3.9, 3.10) und ein zweiter Sekundärbrückenzweig (3.2) zwei in Reihe verschaltete Dioden (3.11, 3.12) vorsehen, wobei eine sekundärseitige Wicklung (2.2) des Transformators (2) mit einem Mittelpunkt (3.4) des ersten Sekundärbrückenzweigs (3.1) einerseits und einem Mittelpunkt (3.5) des zweiten Sekundärbrückenzweigs (3.2) anderseits verbunden wird, wobei in einem ersten Betriebsmodus ein sekundärseitig an die Ladestation angeschlossener externer Verbraucher mit Energie versorgt und bevorzugt ein Fahrzeugenergiespeicher geladen wird und die Halbleiterschaltelemente (3.9, 3.10) des ersten Sekundärbrückenzweigs (3.1) hierbei mit einer ersten Schaltfrequenz geschaltet werden und wobei in einem zweiten Betriebsmodus ein sekundärseitig angeschlossener Entladeenergiespeicher über den Transformator (2) entladen wird, indem die Halbleiterschaltelemente (3.9, 3.10) des ersten Sekundärbrückenzweigs (3.1) in dem zweiten Betriebsmodus mit einer zweiten Schaltfrequenz geschaltet werden, welche höher ist als die erste Schaltfrequenz. Ferner betrifft die Erfindung die Verwendung des Betriebsverfahrens für eine elektrische Versorgungsstation.

## Beschreibung

Die Erfindung betrifft ein Verfahren zum Betreiben einer elektrischen Versorgungsstation mit einem Gleichspannungswandler umfassend einen Transformator zur galvanischen Trennung einer Primärseite des Transformators von einer Sekundärseite, wobei die Primärseite an einen Wechselrichter angeschlossen wird, wobei an dem Transformator sekundärseitig wenigstens zwei zueinander parallele Sekundärbrückenzweige vorgesehen sind, wobei ein erster Sekundärbrückenzweig zwei in Reihe verschaltete Halbleiterschaltelemente und ein zweiter Sekundärbrückenzweig zwei in Reihe verschaltete Dioden vorsehen, wobei eine sekundärseitige Wicklung des Transformators mit einem Mittelpunkt des ersten Sekundärbrückenzweigs einerseits und einem Mittelpunkt des zweiten Sekundärbrückenzweigs anderseits verbunden wird, und wobei in einem ersten Betriebsmodus ein sekundärseitig an die Ladestation angeschlossener externer Verbraucher mit Energie versorgt wird und die Halbleiterschaltelemente des ersten Sekundärbrückenzweigs hierbei mit einer ersten Schaltfrequenz geschaltet werden. Insbesondere dienen ein Fahrzeugenergiespeicher als externer Verbraucher, der geladen wird, und eine Netzfrequenz als erste Schaltfrequenz.

Typische DC-Versorgungsstationen stellen heute eine Funktionalität zum Laden einer Fahrzeugbatterie eines elektrisch betreibbaren Fahrzeugs bereit, welches über ein Ladekabel an die Versorgungsstation angeschlossen ist. Die Versorgungsstationen bilden hierzu typischerweise nur eine einzige Energieflussrichtung ab, bei der die Energie aus dem Versorgungsnetz die Fahrzeugbatterie speist beziehungsweise diese geladen wird. Aufgrund des unidirektionalen Energieflusses sind derartige Versorgungsstationen vergleichsweise kostengünstig realisiert. Beispielsweise sehen sie einen Semi-DAB-Wandler (DAB: dual active bridge) vor.

Ebenfalls sind Versorgungsstationen bekannt, die Energie ins Versorgungsnetz zurückspeisen können und hierzu einen bidirektionalen Energiefluss abbilden. Der bidirektionale Energiefluss erfordert jedoch eine angepasste Wandlertopologie. Bei diesen Versorgungsstationen kommen Vollbrücken-DAB-Wandler oder CLLC-Wandler zum Einsatz, die komplexer und teurer sind als die Semi-DAB-Wandler und zudem höhere Verluste aufweisen. Ein derartiger Wandler ist beispielsweise in der DE 10 2014 214 542 A1 beschrieben.

Aufgabe der vorliegenden Erfindung ist es, eine kostengünstige Lösung zur Rückspeisung von Energie beziehungsweise zum bidirektionalen Betrieb von elektrischen Versorgungsstationen anzugeben.

Zur Lösung der Aufgabe ist die Erfindung in Verbindung mit dem Oberbegriff des Patentanspruchs 1 dadurch gekennzeichnet, dass in einem zweiten Betriebsmodus ein sekundärseitig angeschlossener Entladeenergiespeicher innerhalb kurzer Zeit über den Transformator entladen wird, wobei die Halbleiterschaltelemente des ersten Sekundärbrückenzweigs in dem zweiten Betriebsmodus mit einer zweiten Schaltfrequenz geschaltet werden, welche höher ist als die erste Schaltfrequenz.

Der besondere Vorteil der Erfindung besteht darin, dass durch das höherfrequente Schalten der Halbleiterschaltelemente des Semi-DAB-Wandlers im zweiten Betriebsmodus der Versorgungsstation eine Energieflussumkehr realisiert werden kann, so dass die prinzipiell kostengünstige Topologie der DC-Versorgungsstation mit den sekundärseitigen Dioden nunmehr auch für das Rückspeisen von Energie in Richtung des Versorgungsnetzes verwendet werden kann. Hierdurch gelingt es, eine Versorgungsstation mit robuster, erprobter Schaltungstechnologie und einem kostengünstigen Gleichspannungswandler für die bidirektionale Energieübertragung zu verwenden.

Der primärseitige Wechselrichter sieht beispielsweise eine aktive Vollbrücke vor mit zwei zueinander parallelen Primärbrückenzweigen und zwei in Reihe verschalteten Halbleiterschaltelementen je Primärbrückenzweig. Bevorzugt ist die primärseitige Wicklung des Transformators mit einem Mittelpunkt eines ersten Primärbrückenzweigs einerseits und einem Mittelpunkt eines zweiten Primärbrückenzweigs anderseits verbunden.

Nach einer bevorzugten Ausführungsform der Erfindung werden die Halbleiterschaltelemente in dem zweiten Betriebsmodus mit dem wenigstens Fünffachen und bevorzugt dem wenigstens Zehnfachen der Netzfrequenz geschaltet. Besonders bevorzugt werden die Halbleiterschaltelemente resonant beschaltet. Vorteilhaft verbessert sich hierdurch der Wirkungsgrad bei der Energierückspeisung.

Nach einer Weiterbildung der Erfindung ist sekundärseitig ein dritter Sekundärbrückenzweig mit zwei in Reihe geschalteten Kondensatoren vorgesehen, welche in dem zweiten Betriebsmodus als Entladeenergiespeicher entladen werden. Vorteilhaft wird durch die Energierückspeisung im Falle eines Energieabfalls beziehungsweise eines anderen Notbetriebszustands beim Laden des Fahrzeugs eine Ausgangsspannung der Versorgungsstation innerhalb kurzer Zeit so stark reduziert, dass keine Gefahr für Leib und Leben besteht. Insbesondere kann bewirkt werden, dass die Ausgangsspannung innerhalb von weniger als 2,5 Sekunden auf unter 60 V fällt. Die Halbleiterschaltelemente gewährleisten hierbei eine hohe Schaltdynamik und das erforderliche Ansprechverhalten. Eine DC-seitige Steuerung der Versorgungsstation gewährleistet, dass der Notbetriebszustand ausreichend schnell erkannt und in den zweiten Betriebsmodus umgeschaltet wird.

Nach einer Weiterbildung der Erfindung ist zwischen dem Mittelpunkt des zweiten Sekundärbrückenzweigs und einem Mittelpunkt des dritten Sekundärbrückenzweigs ein Verbindungsleitungsstrang vorgesehen. Der Verbindungsleitungsstrang sieht ein Schaltelement vor zum wahlweisen Herstellen beziehungsweise Trennen der Verbindung zwischen den Mittelpunkten. In dem zweiten Betriebsmodus wird das Schaltelement in einer Öffnungsstellung desselben bereitgestellt. Vorteilhaft kann durch das Vorsehen des Verbindungsleitungsstrangs mit dem Schaltelement im ersten Betriebsmodus durch das wahlweise Herstellen beziehungsweise Trennen der Verbindung das Laden in dem ersten Betriebsmodus mit einer ersten Nennspannung oder einer zweiten Nennspannung erfolgen. Insbesondere wird mit der ersten, kleineren Nennspannung geladen, wenn das Schaltelement geöffnet ist. Demgegenüber wird mit einer zweiten, höheren Nennspannung geladen, wenn das Schaltelement geschlossen ist. Die Energierückspeisung erfolgt bei der ersten, niedrigeren Nennspannung und geöffnetem Schaltelement.

Als elektrisch betreibbare Fahrzeuge im Sinne der Erfindung gelten insbesondere alle Automobile (Pkw, Lkw, Wohnmobile, Zweiräder, Busse, Transporter und andere), Schienenfahrzeuge (insbesondere Lokomotiven), Wasserfahrzeuge (Boote und Schiffe), Luftfahrzeuge sowie Anhänger (Wohnanhänger), mobile Verkaufsstände und andere. Die elektrische Energie kann für Fahrzeuge mit und ohne eigenen Fahrzeugenergiespeicher zur Verfügung gestellt werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung. Sie haben keinen einschränkenden Charakter.

Es zeigen:
- Fig. 1: ein Schaltbild eines Gleichspannungswandlers einer bidirektional betreibbaren Versorgungsstation in einer ersten Konfiguration und
- Fig. 2: ein Schaltbild eines Gleichspannungswandlers einer bidirektional betreibbaren Versorgungsstation in einer zweiten Konfiguration.

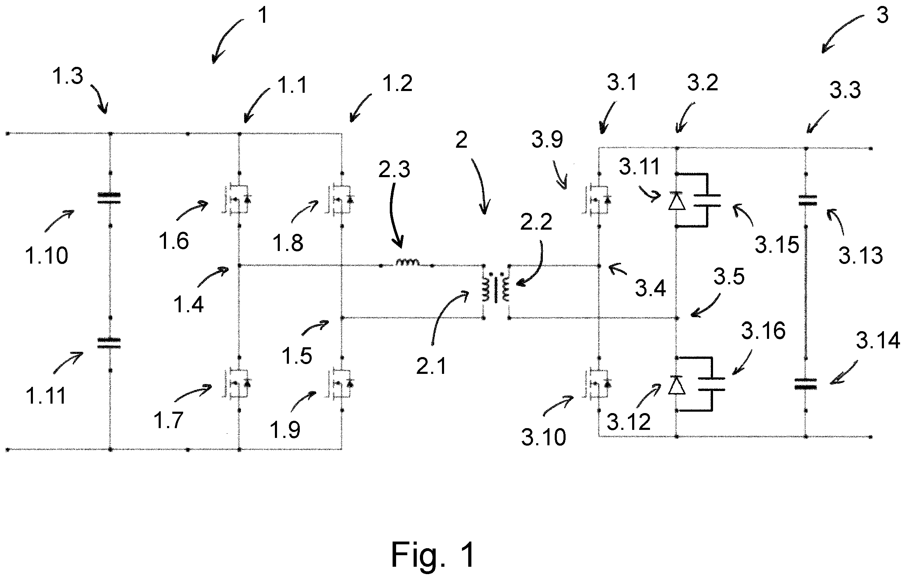

Ein Gleichspannungswandler für eine Versorgungsstation nach Fig. 1 sieht einen Transformator 2 mit einer primärseitigen Wicklung 2.1 und einer sekundärseitigen Wicklung 2.2. vor. Auf einer Eingangs- beziehungsweise Primärseite des Transformators 2 ist ein Wechselrichter vorgesehen, über den eine Wechselspannung an der primärseitigen Wicklung 2.1 bereitgestellt wird und der eine Vollbrücke mit zwei zueinander parallelen Primärbrückenzweigen 1.1, 1.2 und je zwei in Reihe geschalteten Halbleiterschaltelementen 1.6, 1.7, 1.8, 1.9 aufweist. Ein Mittelpunkt 1.4 eines ersten Primärbrückenzweigs 1.1 und ebenso ein Mittelpunkt 1.5 eines zweiten Primärbrückenzweigs 1.2 sind jeweils mit der primärseitigen Wicklung 2.1 des Transformators verbunden.

Zusätzlich ist primärseitig ein dritter Primärbrückenzweig 1.3 mit zwei in Reihe geschalteten Kondensatoren 1.10, 1.11 vorgesehen. Der dritte Primärbrückenzweig 1.3 ist parallel zu den ersten beiden Primärbrückenzweigen 1.1, 1.2 angeordnet.

Auf einer Sekundärseite 3 des Gleichspannungswandlers sind drei zueinander parallele Sekundärbrückenzweige 3.1, 3.2, 3.3 vorgesehen. Ein erster Sekundärbrückenzweig 3.1 sieht zwei in Reihe geschaltete Halbleiterschaltelemente 3.9, 3.10 vor. Ein zweiter Sekundärbrückenzweig 3.2 sieht zwei in Reihe geschaltete Halbleiterfunktionsmodule vor, die vorliegend jeweils durch eine Diode 3.11, 3.12 und einen hierzu parallelen Kondensator 3.15, 3.16 gebildet sind. Ein dritter Sekundärbrückenzweig 3.3 sieht zwei in Reihe geschaltete Kondensatoren 3.13, 3.14 vor. Die sekundärseitige Wicklung 2.2 des Transformators 2 ist mit einem Mittelpunkt 3.4 des ersten Sekundärbrückenzweigs 3.1 einerseits und einem Mittelpunkt 3.5 des zweiten Sekundärbrückenzweigs 3.2 andererseits verbunden.

Sekundärseitig bilden der erste Sekundärbrückenzweig 3.1 mit den Halbleiterschaltelementen 3.9, 3.10 und der zweite Sekundärbrückenzweig 3.2 mit den Halbleiterfunktionsmodulen einen Semi-DAB-Wandler. Um einen sekundärseitig angeschlossenen externen Verbraucher mit Energie zu versorgen, die primärseitig einem Versorgungsnetz oder einer anderen Energiequelle entnommen wird, werden die Halbleiterschaltelemente 3.9, 3.10 des Semi-DAB-Wandlers in einem ersten Betriebsmodus der Versorgungsstation mit einer Netzfrequenz geschaltet. Beispielsweise ist sekundärseitig eine Fahrzeugbatterie als externer Verbraucher an die Versorgungsstation mit dem Gleichspannungswandler angeschlossen. Die Fahrzeugbatterie wird dann in dem ersten Betriebsmodus geladen.

Dem Transformator 2 ist zudem eine Spule beziehungsweise Induktivität 2.3 zugeordnet. Die Induktivität 2.3, die vorliegend exemplarisch auf der Primärseite 2.1 vorgesehen ist, kann durch eine Streuinduktivität des Transformators 2 beziehungsweise seiner Wicklung 2.1, 2.2 definiert oder diskret als ein separates Bauteil ausgebildet sein.

Die Realisierung der Induktivität 2.3 auf der Primärseite 2.1 ist vorliegend lediglich exemplarisch gewählt. Beispielsweise kann die Induktivität 2.3 der Sekundärseite 2.2 des Transformators 2 zugeordnet sein oder es können Induktivitäten sowohl primär- als auch sekundärseitig vorgesehen werden.

In einem zweiten Betriebsmodus sieht das Betriebsverfahren der Versorgungsstation vor, dass die Halbleiterschaltelemente 3.9, 3.10 des Semi-DAB-Wandlers mit einer Schaltfrequenz betätigt werden, die oberhalb der Netzfrequenz liegt. Insbesondere werden die Halbleiterschaltelemente 3.9, 3.10 resonant geschaltet. In dem zweiten Betriebsmodus tragen in der Folge die parallel zu den Gleichrichterdioden 3.11, 3.12 geschalteten Kondensatoren 3.15, 3.16 einen relevanten Teilstrom mit der Folge, dass eine Rückspeisung der Energie aus den Kondensatoren 3.13, 3.14 des dritten Sekundärbrückenzweigs 3.3 auf die Primärseite 1 möglich wird und demzufolge die Ausgangsspannung am Gleichspannungswandler schnell heruntergefahren wird.

Alternativ kann Energie aus der sekundärseitig angeschlossenen Fahrzeugbatterie in Richtung des Versorgungsnetzes zurückgespeist werden. Dies kann beispielsweise der Stabilisierung des Versorgungsnetzes dienen.

Nach einer alternativen, nicht dargestellten Ausführungsform der Erfindung können die Dioden 3.11, 3.12 allein die Halbleiterfunktionsmodule des zweiten Sekundärbrückenzweigs 3.2 bilden. Die Dioden 3.11, 3.12 stellen hierbei eine parasitäre Kapazität bereit, die im zweiten Betriebsmodus den Strom teilweise trägt und der Rückspeisung der Energie auf die Primärseite 1 des Transformators 2 dient.

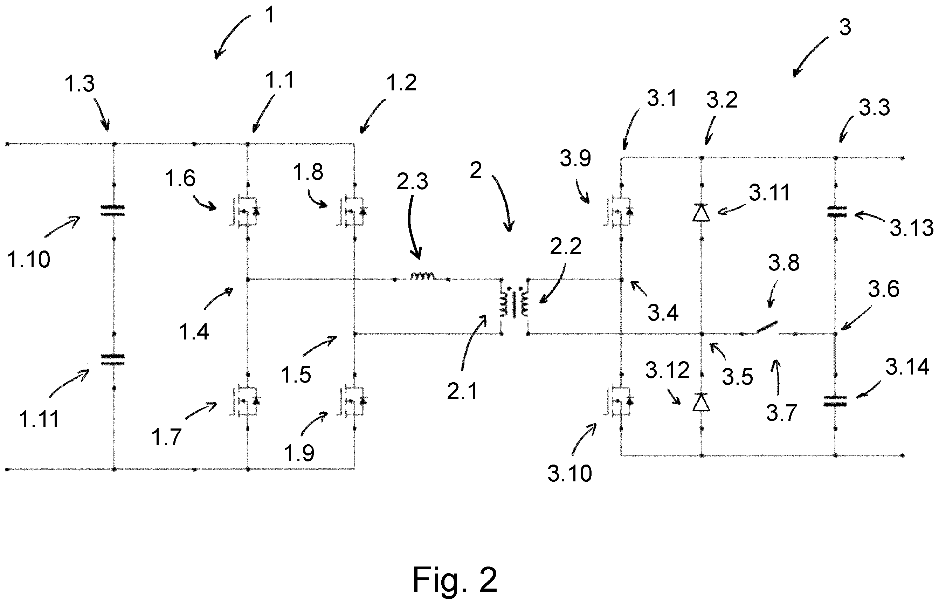

Eine alternative Ausführungsform eines Gleichspannungswandler für die elektrische Versorgungsstation nach Fig. 2 sieht wie gehabt den Transformator 2 mit dem Wechselrichter auf der Primärseite 1 vor. Sekundärseitig ist ein Semi-DAB-Wandler vorgesehen, bei dem die Halbleiterfunktionsmodule des zweiten Sekundärbrückenzweigs 3.2 allein durch die Dioden 3.11, 3.12 gebildet sind. Zusätzlich ist zwischen dem Mittelpunkt 3.5 des zweiten Sekundärbrückenzweigs 3.2 einerseits und einem Mittelpunkt 3.6 des dritten Sekundärbrückenzweigs 3.3 andererseits ein Verbindungsleitungsstrang 3.7 mit einem Schaltelement 3.8 vorgesehen. Das Schaltelement 3.8 dient der wahlweisen Herstellung beziehungsweise Unterbrechung einer elektrisch leitenden Verbindung zwischen den Mittelpunkten 3.5, 3.6 des zweiten und dritten Sekundärbrückenzweigs 3.2, 3.3. Als Schaltelement kann beispielsweise ein Relais oder ein Schütz dienen.

In dem ersten Betriebsmodus der Versorgungsstation, in dem die Halbleiterschaltelemente 3.9, 3.10 des Semi-DAB-Wandlers mit der Netzfrequenz geschaltet werden, kann das Schaltelement 3.8 geöffnet oder geschlossen sein. Sofern das Schaltelement 3.8 geöffnet ist, wird ausgangsseitig an dem Gleichspannungswandler eine erste Nennspannung von typischerweise bis zu 400 V beziehungsweise 500 V bereitgestellt. Bei geschlossenem Schaltelement 3.8 wird eine doppelt so hohe zweite Nennspannung von 800 V oder 1.000 V bereitgestellt. Je nach Konfiguration beziehungsweise Anwendungsfall kann die erste Nennspannung bis zu 750 V betragen. Die bei geschlossenem Schaltelement 3.8 bereitgestellte zweite Nennspannung beträgt bis zu 1.500 V.

Bei geöffnetem Schaltelement 3.8 entspricht die Funktionsweise in dem zweiten Betriebsmodus im Wesentlichen der des Gleichspannungswandlers nach Figur 1. Zu berücksichtigen ist hierbei, dass die Dioden 3.11, 3.12 parasitär die Kapazität bereitstellen, die in dem zweiten Betriebsmodus den Strom für die Rückspeisung beim Entladen der Kondensatoren 3.13, 3.14 beziehungsweise eine sekundärseitig angeschlossene Fahrzeugbatterie teilweise trägt.

Ist das Schaltelement 3.8 demgegenüber geschlossen, können die Kondensatoren 3.13, 3.14 des dritten Sekundärbrückenzweigs 3.3 beziehungsweise der sekundärseitig angeschlossene Fahrzeugenergiespeicher unmittelbar ohne Rückgriff auf das erfindungsgemäße Betriebsverfahren entladen und die Energie auf die Primärseite übertragen werden.

Eine Kapazität der Kondensatoren 3.13, 3.14 des dritten Sekundärbrückenzweigs 3.3 beträgt beispielsweise 70 *µF.* Für die Halbleiterfunktionsmodule des zweiten Sekundärbrückenzweigs 3.2 werden beispielsweise Kondensatoren 3.15, 3.16 mit einer Kapazität von 8 *nF* parallel zu den Dioden 3.11, 3.12 geschaltet.

Gleiche Bauteile und Bauteilfunktionen sind durch gleiche Bezugszeichen gekennzeichnet.

## Patentansprüche

1. Verfahren zum Betreiben einer elektrischen Versorgungsstation mit einem Gleichspannungswandler umfassend einen Transformator (2) zur galvanischen Trennung einer Primärseite (1) des Transformators (2) von einer Sekundärseite (3),
- wobei die Primärseite (1) an einen Wechselrichter angeschlossen wird,
- wobei an dem Transformator (2) sekundärseitig wenigstens zwei zueinander parallele Sekundärbrückenzweige (3.1, 3.2) vorgesehen sind, wobei ein erster Sekundärbrückenzweig (3.1) zwei in Reihe verschaltete Halbleiterschaltelemente (3.9, 3.10) und ein zweiter Sekundärbrückenzweig (3.2) zwei in Reihe verschaltete Dioden (3.11, 3.12) vorsehen und wobei eine sekundärseitige Wicklung (2.2) des Transformators (2) mit einem Mittelpunkt (3.4) des ersten Sekundärbrückenzweigs (3.1) einerseits und einem Mittelpunkt (3.5) des zweiten Sekundärbrückenzweigs (3.2) anderseits verbunden wird,
- wobei in einem ersten Betriebsmodus ein sekundärseitig an die Ladestation angeschlossener externer Verbraucher mit Energie versorgt und bevorzugt ein Fahrzeugenergiespeicher geladen wird und die Halbleiterschaltelemente (3.9, 3.10) des ersten Sekundärbrückenzweigs (3.1) hierbei mit einer ersten Schaltfrequenz geschaltet werden,
**dadurch gekennzeichnet, dass** in einem zweiten Betriebsmodus ein sekundärseitig angeschlossener Entladeenergiespeicher über den Transformator (2) entladen wird, indem die Halbleiterschaltelemente (3.9, 3.10) des ersten Sekundärbrückenzweigs (3.1) in dem zweiten Betriebsmodus mit einer zweiten Schaltfrequenz geschaltet werden, welche höher ist als die erste Schaltfrequenz.

2. Verfahren nach Anspruch 1, **dadurch gekennzeichnet, dass** die Halbleiterschaltelemente (3.9, 3.10) in dem zweiten Betriebsmodus wenigstens mit dem Fünffachen und bevorzugt wenigstens dem Zehnfachen der ersten Schaltfrequenz und/oder einer als ersten Schaltfrequenz dienenden Netzfrequenz geschaltet werden.

3. Verfahren nach Anspruch 1 oder 2, **dadurch gekennzeichnet, dass** die Halbleiterschaltelemente (3.9, 3.10) in dem zweiten Betriebsmodus resonant beschaltet werden.

4. Verfahren nach einem der Ansprüche 1 bis 3, **dadurch gekennzeichnet, dass** sekundärseitig ein dritter Sekundärbrückenzweig (3.3) vorgesehen ist, dass der dritte Sekundärbrückenzweig (3.3) wenigstens einen und bevorzugt zwei in Reihe verschaltete Kondensatoren (3.13, 3.14) aufweist und dass in dem zweiten Betriebsmodus der wenigstens eine Kondensator (3.13, 3.14) des dritten Sekundärbrückenzweigs (3.3) als Entladeenergiespeicher entladen wird.

5. Verfahren nach Anspruch 4, **dadurch gekennzeichnet, dass** zwischen dem Mittelpunkt (3.5) des zweiten Sekundärbrückenzweigs (3.2) und einem Mittelpunkt (3.6) des dritten Sekundärbrückenzweigs (3.3) ein Verbindungsleitungsstrang (3.7) vorgesehen ist, dass der Verbindungsleitungsstrang (3.7) ein Schaltelement (3.8) vorsieht zum wahlweisen Herstellen und Trennen einer Verbindung zwischen diesen Mittelpunkten (3.5, 3.6) und dass in dem zweiten Betriebsmodus das Schaltelement (3.8) in einer Öffnungsstellung bereitgestellt wird.

6. Verfahren nach einem der Ansprüche 1 bis 5, **dadurch gekennzeichnet, dass** in dem zweiten Sekundärbrückenzweig (3.2) wenigstens zu einer Diode (3.11, 3.12) eine Kapazität (3.15, 3.16) parallel angeordnet wird zur Bildung eines kapazitiv wirksamen Halbleiterfunktionsmoduls.

7. Verwendung eines Betriebsverfahrens für eine elektrische Versorgungsstation mit einem Gleichspannungswandler nach einem der Ansprüche 1 bis 6, wobei die Versorgungsstation zum schnellen Entladen der Kondensatoren (3.13, 3.14) des dritten Sekundärbrückenzweigs (3.3) in einem Notbetriebszustand in den zweiten Betriebsmodus verbracht wird und die Halbleiterschaltelemente (3.9, 3.10) des ersten Sekundärbrückenzweigs (3.1) mit der zweiten Schaltfrequenz geschaltet werden.
